# EUROPEAN PATENT SPECIFICATION

(11) **EP 3 310 953 B1**
(45) Date of publication and mention of the grant of the patent: **02.03.2022**
(21) Application number: 16812636.5
(22) Date of filing: 20.06.2016
(51) Int. Cl.: D03D 47/30, F03G 7/00

(54) **DIRECTED ENERGY DEPOSITION TO FACILITATE HIGH SPEED APPLICATIONS**
GERICHTETE ENERGIEABLAGERUNG ZUR ERLEICHTERUNG VON HOCHGESCHWINDIGKEITSANWENDUNGEN
DÉPÔT D'ÉNERGIE DIRIGÉ POUR FACILITER LES APPLICATIONS À VITESSE ÉLEVÉE

(30) Priority: 18.06.2015 US 201562181625 P; 17.06.2016 US 201615186337; 17.06.2016 WO PCT/US2016/038239
(43) Date of publication of application: 25.04.2018
(73) Proprietor: Kremeyer, Kevin, Kamuela, Hawaii 96743 (US)
(72) Inventor: Kremeyer, Kevin, Kamuela, Hawaii 96743 (US)
(74) Representative: Holzwarth-Rochford, Andreas
(86) International application number: PCT/US2016/038421
(87) International publication number: WO 2016/205816

(56) References cited:
- US-A- 4 146 061
- US-A- 4 313 576
- US-A- 4 347 872
- US-A- 4 369 817
- US-A- 4 905 741
- US-A1- 2005 061 908
- US-A1- 2007 169 831

## Description

### Field of the Invention

Energy deposition techniques have been disclosed in the past, in order to achieve dramatic effects in a number of applications, such as flow control, drag reduction, and vehicle control, among many others. In studying the dramatic benefits of depositing energy, a number of modifications can be made in how and/or when the energy is deposited, in order to enhance the benefits derived from depositing energy when not implementing these modifications. One such modification is to coordinate the energy deposition with one or more other processes, in order to synchronize, "time", or "phase" the effects of the energy deposition with such other processes, in order to achieve additional benefits or maximize the effect of interest (the terms "synchronize", "time", and "phase" may be used relatively interchangeably to indicate timing an event or process with respect to one or more other events and/or processes). Such events and/or processes include, but are not limited to: propulsive processes; fluid dynamic processes; chemical processes; specific motions; injection, addition, and/or deposition of additional energy; injection, addition, and/or deposition of additional material; removal of energy; removal of material; pressure changes; application of one or more forces; combustion processes; ignition processes; detonation processes; among many others. Furthermore, the concept of energy deposition is broadly interpreted to include any process which adds energy into a medium, or results in heating of a medium. This heating or energy deposition can be performed sufficiently quickly (for example, impulsively) to result in expansion of a medium faster than the speed of sound in said medium, resulting in a region left behind by the expansion, of lower density than the original medium. Another possibility is that the energy deposition and/or the process resulting in heating can result in a phase change in a medium, which can modify the density and/or other properties of said heated medium or media, such as viscosity and/or strength, among others. These changes to a medium or media, including density, viscosity, and/or strength, among others, can result in modifications to the flow properties of the medium or media, as well as modifications to other properties and responses of said affected media.

Furthermore, from the state of the art, weaving devices for forming a shed consisting of warp yarns are known, for example US2007/0169831 A1 discloses such a weaving device.

US 4 369 817 A teaches that a weft yarn is dragged or pulled by the action of high pressure air jet ejected through a weft inserting nozzle, and thereafter carried through the shed of warp yarns under cooperation of the high pressure air jet and low pressure air jet ejected through the nozzle.

### Background of the Invention

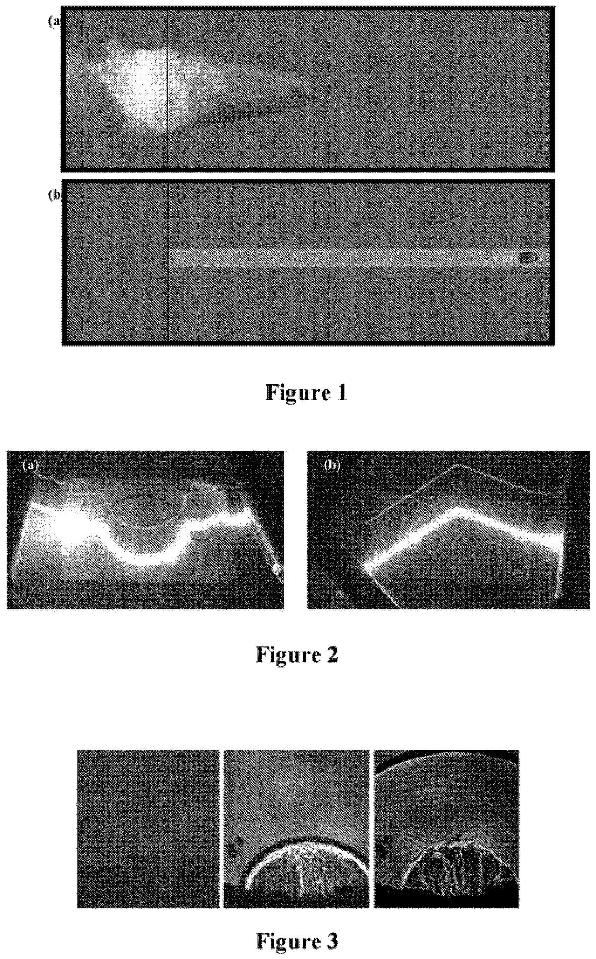

Since its beginning, PM&AM Research has been pioneering a broad range of energy deposition applications to revolutionize how the world flies and controls high speed flow in particular, how we execute high-speed flight and flow-control, ranging from high subsonic to hypersonic regimes. There are a number of applications to provide an intuitive feel of the many possibilities opened up by this novel approach. The basic effect stems from our approach to rapidly expand gas out of regions, through which we want high-speed/high-pressure gas to flow. As a simple analogy (requiring some imagination and license), consider the difference in effectiveness of trying to make a projectile cross through the Red Sea at high speed, either firing the projectile directly through the water from one side to the other, or first "parting" the Red Sea and then firing the same bullet through a path that contains no water (Figure 1).

In the first case of firing the bullet directly into the high-density water, even a massive, streamlined, 1000m/s bullet will penetrate less than 1m of the water. In the second case, after first "parting" the water (i.e. creating a path, from which the water has been removed), the same bullet even at 300m/s can easily propagate for very long distances (this heuristic example does not address the drop from gravity, which is addressed later in the paper). It is this concept and geometry that we exploit, in order to achieve revolutionary control over high-speed flow and high-speed vehicles/projectiles.

### Summary of the Invention

A method of operating an intermittent air jet weaving machine to form a textile following the invention is described in claim 1.

An intermittent air jet weaving machine configured to form a textile following the invention is described in claim 13.

In certain embodiments, one or more than one (including for instance all) of the following embodiments may comprise each of the other embodiments or parts thereof. In certain embodiments, for example, the heating may comprise depositing in the range of 1 kJ-10 MJ of energy into the fluid, for example in the range of 10 kJ-1 MJ, 100-750 kJ, or in the range of 200 kJ to 500 kJ. In certain embodiments, for example, the heating may comprise depositing in the range of 10-1000 kJ of energy into the fluid per square meter of cross-sectional area of the object, for example in the range of 10-50 kJ, 50-100 kJ, 100-250 kJ, 250-500 kJ, or in the range of 500-1000 kJ/ per square meter. In certain embodiments, for example, the heating may comprise generating a shock wave. In certain embodiments, for example, the lower density region may have a density in the range of 0.01-10% relative to the density of the ambient fluid, for example a density in the range of 0.5-5%, 1.0-2.5%, or a density in the range of 1.2-1.7% relative to the density of the ambient fluid. In certain embodiments, for example, the portion of the fluid may be heated along at least one path. In certain embodiments, the at least one path may be formed by energy deposited from a laser, for example a laser filament guided path. In certain embodiments, the laser deposition may comprise a laser pulse lasting for a time in the range of 1 femtosecond and 100 nanoseconds, for example a time lasting in the range of 10 femtoseconds to 20 picoseconds, 100 femtoseconds to 25 picoseconds, 100 picoseconds to 20 nanoseconds, or a time lasting in the range of 100 femtoseconds to 30 picoseconds. In certain embodiments, the amount of energy deposited by the laser pulse may be in the range of 0.2 mJ to 1 kJ, for example in the range of 1 mJ to 10 mJ, 10 mJ to 3 J, 100 mJ to 10 J, 10 J to 100 J, 100 J to 1000 J, or in the range of 500 mJ to 5 J. In certain embodiments, the laser may generate light in the ultraviolet, infrared, or visible portion of the spectrum. In certain embodiments, the at least one path may be parallel to the direction of motion of the object. In certain embodiments, the lower density region may comprise a volume of the portion of the heated fluid expanding outwardly from the at least one path. In certain embodiments, for example, the heated portion of the fluid may be heated by an electrical discharge, for example a pulsed electrical discharge. In certain embodiments, the electrical discharge may travel through the fluid at a speed in the range of 10⁶-10⁷ m/s. In certain embodiments, the electrical discharge may last for a time in the range of 0.1-100 microseconds, for example a time in the range of 0.1-2 microseconds, 1-5 microseconds, 5-40 microseconds, 10-30 microseconds, or a time in the range of 30-100 microseconds. In certain embodiments, the lower density region may be formed within a time in the range of 10-30 microseconds, for example a time in the range of 20-300 microseconds, 20-200 microseconds, 30-100 microseconds, 100-500 microseconds, 400-1500 microseconds, or a time in the range of 500-3000 microseconds. In certain embodiments, the lower density region may be disrupted by thermal buoyancy forces after a period of time in the range of 10-1000 milliseconds, for example in the range of 20-80 milliseconds, 30-60 milliseconds, 80-120 milliseconds, 150-600 milliseconds, or after a period of time in the range of 400-1000 milliseconds. In certain embodiments, the pulsed power source may provide energy to a filamenting laser, said filamenting laser forming said path, said path capable of guiding a pulsed electrical discharge. In certain embodiments, the pulsed power source may provide energy to a pulse electrical discharge generator, said generator used to heat said portion of the fluid. Certain embodiments, for example, may further comprise: heating a further portion of the fluid to form a further lower density region. In certain embodiments, the lower density region and the further lower density region may be separated by a region. Certain embodiments, for example, may further comprise: directing at least a further portion of the object into said region. Certain embodiments, for example, may further comprise: directing at least a further portion of the object into the further lower density region. In certain embodiments, for example, the heated portion of the fluid may define a tube. In certain embodiments, the speed of sound inside the tube may be at least 100% larger than the speed of sound in the ambient fluid, for example at least 150%, 200%, 500%, or at least 1000% larger. In certain embodiments, the motion of the object inside the tube may be subsonic. In certain embodiments, at least a portion of the motion of the object outside the tube may be supersonic. In certain embodiments, the tube may have a diameter of in the range of 5%-100% of the effective cross-sectional diameter of the object, for example in the range of 5%-20%, 20%-75%, 30%-50%, 75%-96%, or in the range of 35%-45%.

Certain embodiments may provide a method of operating an intermittent air jet weaving machine, to form a textile, said air jet weaving machine configured to receive a weft yarn and further configured to form a warp shed, said method comprising: depositing energy to form a low density guide path for the weft yarn to pass through the warp shed.

In certain embodiments, one or more than one (including for instance all) of the following embodiments may comprise each of the other embodiments or parts thereof. In certain embodiments, for example, depositing energy may comprise depositing in the range of 5-50 mJ per 10 cm of guide path per 1 mm diameter of weft yarn, for example in the range of 5-8 mJ, 8-10 mJ, 10-15 mJ, 15-20 mJ, 20-30 mJ, 30-40 mJ or in the range of 40-50 mJ, or at least 8 mJ, at least 20 mJ, or at least 40 mJ. In certain embodiments, for example, the weft yarn may have a diameter of in the range of 0.1-1 mm, for example a diameter in the range of 0.25-0.75 mm, or a diameter in the range of 0.5-0.7 mm, such as a diameter of 0.6 mm. In certain embodiments, for example, the weft yarn may travel through the guide path at a speed in the range of 100-500 m/s, for example at a speed in the range of 200-400 m/s, or at a speed of at least 200 m/s, for example at a speed of at least 250 m/s, 300 m/s, or at a speed of least 350 m/s. In certain embodiments, for example, the weft yarn may travel through the guide path at a speed in the range of greater than Mach 0.1, for example at a speed greater than Mach 0.3, Mach 0.8, Mach 1, or at a speed greater than Mach 1.5. In certain embodiments, for example, the textile may be formed at a rate in the range of between 500-60,000 picks per minute, for example 2000-50,000 picks per minute, 8,000-30,000 picks per minute, or at a rate in the range of 15,000-25,000 picks per minute. In certain embodiments, for example, the guide path may be cylindrical.

The invention comprises propelling the weft yarn into the low density guide path with a burst of high pressure air. In certain embodiments, the burst of high pressure air may be synchronized with the energy deposition. In certain embodiments, the low density guide path may be formed downstream of the burst of high pressure air.

In certain embodiments, one or more than one (including for instance all) of the following embodiments may comprise each of the other embodiments or parts thereof. In certain embodiments, for example, a further portion of energy may be deposited downstream of a booster air supply to form a further low density guide path. In certain embodiments, for example, the weft yarn may be moistened with a quantity of water. In certain embodiments, at least a portion of the quantity of water may be vaporized in the low density guide path.

Certain embodiments may provide, an air jet weaving machine configured to form a textile, said machine comprising: i) an apparatus comprising plurality of profile reeds mounted on a sley, said apparatus configured to form a warp shed; ii) a directed energy deposition assembly, said assembly configured to generate a low density guide path across the warp shed; and iii) a weft yarn nozzle in communication with a pressurized air supply, said weft yarn nozzle configured to propel a portion of a weft yearn through the low density guide path. In certain embodiments, one or more than one (including for instance all) of the following embodiments may comprise each of the other embodiments or parts thereof. In certain embodiments, for example, the warp shed may be in the range of 3-30 m in length, for example in the range of 4-4.5 m, 4.5-6 m, 6-8 m, 8-10 m, 5-25 m, or in the range of 10-20 m in length.

Outside the scope of the claims is a method of retrofitting a weaving machine (for example, an air jet weaving machine, water-jet weaving machine, shuttle looms, picks loom, and/or high-speed loom), comprising: installing a directed energy deposition sub-assembly, said sub-assembly configured to deposit energy on a path connecting a yarn dispensing nozzle of the loom with an electrode positioned on the opposite side of the loom and passing through the profiles of a plurality of reeds.

### Detailed Description of the Drawings

Figures 1A and 1B. A schematic cartoon contrasting (1A) the ineffectiveness of a bullet trying to propagate through water at high speed, compared to (1B) the same bullet propagating effortlessly, after the water has been laterally moved out of its way. In the brute force approach, the bullet's energy is very quickly transferred to the water (and material deformation). In our approach, the bullet propagates for a much longer distance, interacting with its surroundings through much weaker forces.
Figures 2A and 2B. Strong electric discharges can be used to deposit energy along arbitrary geometries on a surface, with examples depicted here of (2A) a semi-circular path and (2B) straight lines.
Figures 3A-3C. A time sequence of schlieren images which show a blast (supersonic shock) wave pushing open a region of hot, low-density gas (left (3A) and center (3B) images), as a result of energy being deposited along a with the shock wave propagating away at sonic speed after it has reduced in strength to Mach 1 (right image, (3C)), and can no longer drive/push open the low-density region.
Figure 4: Energy is deposited in the air, by focusing an intense laser pulse to a point in the air, with sufficient intensity to ionize the gas molecules, effectively instantaneously compared to the fluid response.
Figure 5. Shadowgraph imagery demonstrates the blast wave from a laser "spark", such as the one shown in Figure 4, driving open a region of low density gas, which stays behind for an extended period of time as a low-density region in the ambient gas.
Figure 6. Laser filaments create straight ionized channels, along the path of an ultrashort laser pulse.
Figures 7A and 7B. Laser filaments from ultrashort laser pulses can be used to precisely trigger and guide electric discharges along their (7B) straight paths, vs (7A) the typically less controllable discharges in spatial and temporal terms.
Figure 8. A very small low-density "tube" is pictured here, to take the place of the much larger tubes.
Figure 9. Schematic depiction of an embodiment of an air jet loom having an integral directed energy deposition device.

### Detailed Description of the Invention

The basic idea behind our energy-deposition approach is that we are able to redistribute/sculpt the air's density by quickly ("impulsively") depositing energy into it. It is important to note that in order to effectively "part" the air, the energy must be deposited into the air much faster than the gas can expand (e.g. in the form of a short laser- or microwave-pulse, and/or an electric discharge, among other techniques). Any heating that allows the gas to propagate away as it is heated, even if using very high temperatures, will not yield the highly effective results we describe here. Generally, the "sudden"/"impulsive" heating process will generate a "snap" or "bang".

In order to: i) tailor the intensity and spatial distribution of specific modes of energy deposition; ii) maintain specific paths and channels for proper transmission; and iii) achieve the coupling of energy into the flow; a variety of energy deposition techniques may be applied to address a variety of atmospheric and flow conditions possible, in the broadest range of applications. The most effective energy deposition approaches, either: to form a nucleating/guiding/initiating region (e.g. an initial path), into which to deposit further energy; or to deposit further energy into such an initial region or path; will depend on the atmospheric conditions (including all represented media and mixed phases, such as gases, liquids, solids, plasmas), within/through which they are to be formed, as well as the associated operational flow conditions. Certain atmospheric and flow conditions may call for an initial path to be formed via depositing energy, into which more energy can be coupled as a following step. Other atmospheric and flow conditions may call for energy to be deposited in a single step. In certain applications, the energy may be deposited: along one or more surfaces; in one or more regions in the atmosphere/flow; and/or some combination of these. The one or more energy deposition steps can include combinations of one or more of, although not limited to, the following energy deposition techniques: electromagnetic radiation (ranging from xrays to microwaves); RF plasma discharges; as well as electrical current in the form of electron beams, charged particle beams, electric discharges, and corona discharges; with the temporal duration of these energy deposition techniques ranging from continuous beams to ultrashort pulses (e.g. pulse widths of: attoseconds; femtoseconds; picoseconds; nanoseconds; microseconds; milliseconds; seconds; and longer, up to continuous deposition). These timescales may differ for different embodiments and different modes of energy deposition, with the deposition of the different modes taking place at their respective time scales. In addition to utility in its own right, continuous or long-duration energy deposition can also facilitate shorter-pulse impulsive energy deposition, in certain regimes. Furthermore, applications, involving pulsing/phasing/synchronization of certain processes with energy deposition, can also incorporate longer-pulse and continuous processes

The above embodiments of differeing energy deposition applications and techniques may be applied (over a range of possible operating atmospheres and conditions) for looms.

To illustrate the following explanation, it is best to first look at Figure 2 and Figure 3 as examples of the expansion being described. Once the energy has been "effectively instantaneously" ("impulsively") deposited in a specific region of the air (e.g. along a line or at a point), the surrounding air is driven outward from the heated region by an expanding blast wave. Until the blast wave, resulting from the deposited energy, decays/slows to sonic speed, the surrounding gas is swept outward, leaving behind a region of hot, pressure-equilibrated gas, whose density is much less than the original/ambient density (in some cases less than 15%, for example less than 10%, 8%, 5%, 3%, 2%, or less than 1.5% of the ambient density, with the other 98.5% having been pushed outward). Once the expanding shockwave has slowed to sonic speed, it continues to expand out sonically, no longer pushing gas outward and no longer expanding the low-density region. The low-density region (generated when the blast wave was expanding supersonically) remains behind, pressure-equilibrated with the surrounding ambient pressure (e.g. it survives as a "bubble" of atmospheric-pressure, low-density, hot gas, which does not collapse back onto itself...i.e. it is a region in which "the air has been parted"). The volume of this pressure-equilibrated low-density region is directly proportional to the energy that is deposited in the gas and also proportional to the ambient pressure (e.g. the resulting low-density volume is doubled if the initial atmospheric pressure, before depositing the energy, is halved). An example of this expansion and resultant low-density region along a surface is shown in Figure 3, which provides an end view of a single straight leg of an electric discharge, such as those shown in Figure 2(b), yielding a schlieren photograph, looking along the path of the electric discharge.

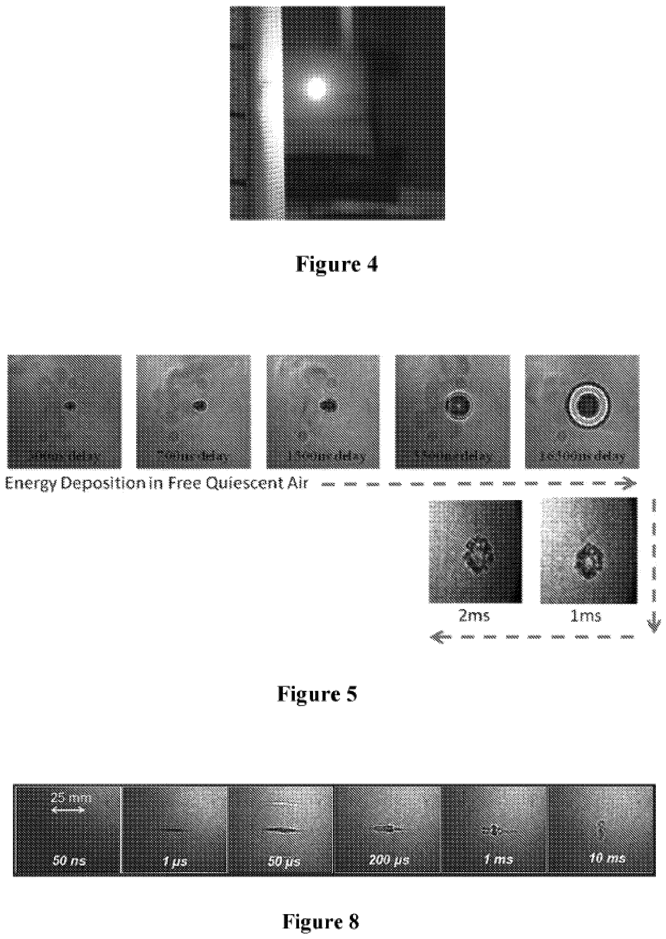

The simplest example of expanding a low-density "bubble" can be seen when depositing energy at a point in the air (Figure 4), from which the gas expands spherically-symmetrically, in order to open up a low-density sphere (Figure 5).

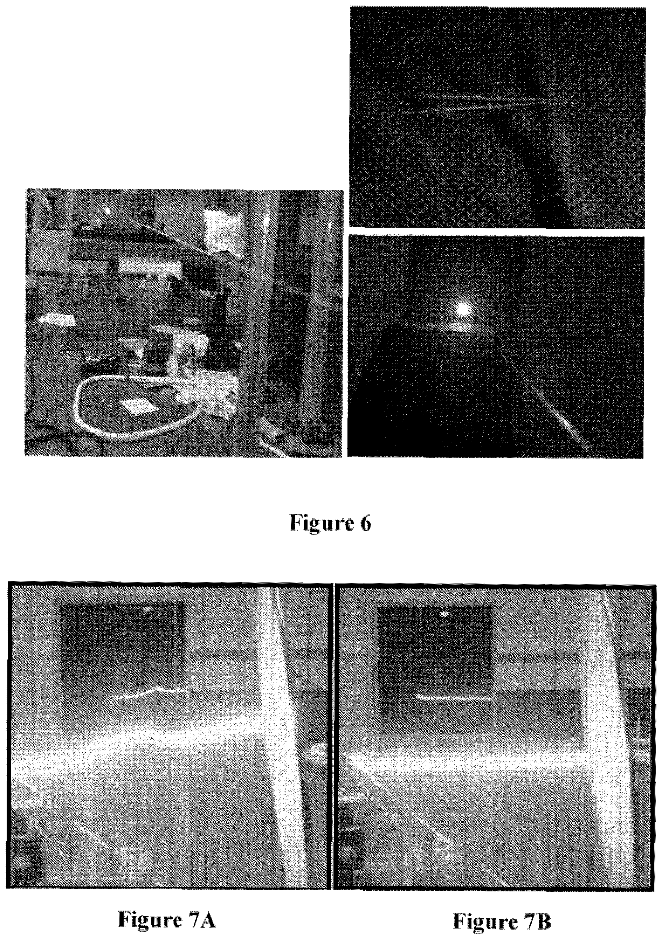

A similarly simple geometry occurs when energy is deposited along a straight line (Figures 6, 7 and 8). This leads the gas to expand and open up a low-density cylindrical volume (or "tube"), centered around the original line/axis, along which the energy was originally deposited.

The fact that the hot, low-density geometries equilibrate to ambient pressure and remain for long periods of time, compared to the flow dynamics of interest, allows the low-density regions (e.g. spheres and "tubes" in air and half-spheres and half-"tubes" along surfaces, as well as other more complex geometries) to stay "open" sufficiently long to execute the intended flow control.

When weaving fabric in a loom, it is necessary for the weft thread (or filling or yarn) to be propelled by some method through the warp, in order to form the weave. A number of methods are used to propel/insert the weft, including but not limited to a shuttle, a rapier (single rigid, double rigid, double flexible, and double telescoping), a projectile, an air jet, and a water jet. In addition to the more traditional single weft insertion (or single pick insertion), multi-phase weft insertion (or pick insertion) is also employed. For all of these applications, one of the limiting factors of loom performance is the speed at which the weft can traverse the warp. This speed tends to be limited by a number of factors, including but not limited to the drag force and the turbulence/stability experienced during the traverse process. These limitations can be strongly mitigated by synchronizing (or phasing or timing) energy deposition ahead of any of the moving objects listed above (shuttle, rapier, projectile, air jet, water jet) to reduce the drag force, increase stability, and increase the speed at which the weft/pick can traverse the warp. In particular, this energy-deposition can be in the form to yield a low density tube or series of low-density tubes to hasten and guide the weft across the warp. This increased speed and stability can facilitate faster throughput for any of the single or multi-phase weft/pick insertion approaches. In addition to increasing the loom productivity by increasing throughput in terms of speed, the enhanced stability that can be achieved when propagating through a low-density tube enables the weft to stably travel much longer distances (which allows a loom to produce a final product of greater width). In addition to the cost savings in building a longer loom (that produces a greater width of finished weave), an additional benefit of the weft traveling a longer distance is that the acceleration and deceleration time and energy is better leveraged, in that more weft is laid down for each initial acceleration and final deceleration event. Either of these improvements (greater speed or greater width) will increase the productivity of the loom, and their combination can yield yet larger productivity increases, in terms of greater fabric area being produced in a shorter amount of time. As a result, phasing/synchronizing/timing energy deposition ahead of any of the methods used to propagate the weft across the warp can increase loom output and cost-effectiveness.

When using a physical object, such as a rapier, shuttle, or projectile, the dynamics of energy deposition are very similar to the dynamics described for reducing drag on an air vehicle or ground vehicle, in that lines of energy are deposited ahead of the object, minimizing its drag and increasing its stability. These same concepts hold when an air jet or water jet is employed, and these are described in greater detail here. Air- and water-jets are typically used when high throughput is desired, because there is no added inertia beyond that of the thread/filling/yarn itself. The added inertia of a shuttle, rapier, or projectile, increases the time required to accelerate and decelerate the weft and leads to additional unwanted stresses on the thread/filler/yarn itself. In the case of an air jet, profiled reeds can be used to provide a path for the propagation of the weft. An initial burst of air launches the weft, which rapidly slows due to drag, and whose speed is limited, due to the instability it suffers due to turbulence and drag forces at higher speeds. (In the case of a water-jet loom the weft is propelled via a water jet instead of an air jet, and the same considerations hold for water-jet looms that we discuss for air-jet looms.) Booster jets are used to re-accelerate the weft, after it has slowed down between the booster jets, always remaining below the maximum speed the weft can maintain in its standard atmosphere. One approach to mitigate the problems due to air resistance is to propagate the weft through a vacuum, low-pressure, and/or high-temperature environment. This technology has been developed for a number of industries (e.g. coating of mylar films for the packaging industry, among many others). Instead of operating in a vacuum, low-pressure, and/or high-temperature environment, an added benefit of using energy deposition is the tremendous stability gained by the weft and its propelling jet when propagating through the low-density tubes, enhanced by the ability to excellently match the tube length- and time-scales with those of the weft and its propagation. Because the warp must be free to articulate back and forth, it is not possible to install a physical evacuated tube, down which we can propel the weft with compressed air booster jets. Depositing energy, in order to temporarily create low-density tubes in the air, which can guide the weft and allow it to be more easily propelled by the compressed gas boosters, provides the benefit of a rigid, evacuated, guide tube, without introducing a physical obstruction to block the warp motion. Much of the current designs can remain the same when implementing our energy-deposition approach. The boosters will still propel the weft, and their support structures (for example, profiled reeds) can also serve as the support structure for the energy-deposition, which will consist of either optics or high-voltage electrodes or some combination of both, each of which, including their combination, are much simpler than the current high-pressure boosters. If only laser energy is used to deposit the energy, then only optical elements will need to be positioned on the booster support structures. If only electric discharge energy is used, then only high voltage electrodes will need to be positioned on the booster support structures. If both types of energy are used, then both optical elements and high voltage electrodes will need to be installed on the booster support structures. The fact that there is much less wear and fraying of the weft due to turbulence and drag , and the fact that the weft is much better supported, with much less drag, when propagating through the low-density tube, will both allow the weft to be propagated over much longer distances.

In one embodiment, matching the low-density tube diameter with a thread of 0.6mm diameter calls for depositing roughly 6mJ of energy for every 10cm length. Instead of the typical peak weft speeds ranging from 1200 meters/minute (~20m/s) to 4800 m/min (~80m/s), if the speed of the weft traveling through the low density tubes is significantly higher at 300m/s, it is traveling 4 to 12 times faster than in the unmitigated case. At this speed, the weft is traveling 4 to 15 times faster than it does without energy deposition. Also, if the loom can now be made 3 times longer (wider), due to the added stability of the weft trajectory and increased speed, 3 times more fabric is being generated with each pass of the weft. As a result, if the speed and width are both increased according to this example, the total loom output will be increased by a factor ranging between 12 to 45 times over the output of a loom that is not improved through the use of energy deposition to facilitate weft travel. If a range of extended/improved/enhanced loom widths is considered from 2 to 4 times longer, then the improvement in loom output by depositing energy ahead of the weft is extends from 8 times to 60 times. For larger weft diameters, larger diameter low-density tubes will be created to facilitate their propagation. Since the required energy scales with the volume of the low-density tube it opens up, the energy per unit length scales as the square of the tube diameter, which will therefore scale roughly with the square of the weft diameter, since we will tend to open tubes of slightly larger diameter than the weft diameter, in order to minimize wear on the weft/fiber/material.

To provide additional confinement for ionic solution in the water-jet application or for electrically-conductive fibers in either the air-jet or water-jet application, a strong magnetic field can be aligned with the desired propagation direction of the high-speed thread, in order to more accurately constrain the path of said conductive solution and/or thread.

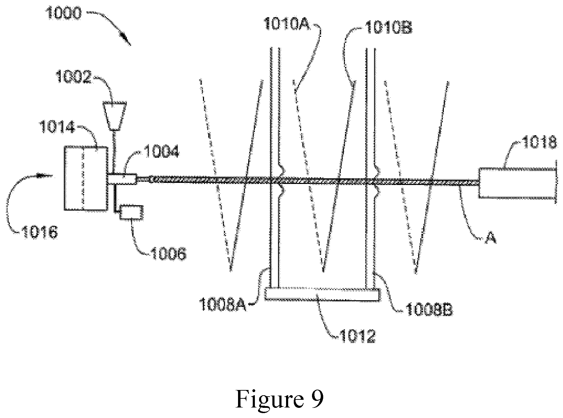

FIG. 9 is a schematic depicting an embodiment of an air jet loom 1000 equipped with a directed energy deposition device 1016. Directed energy deposition device 1016 comprises a pulse laser subassembly 1014 configured to generate a straight path extending from weft yarn delivery nozzle 1004 to opposing electrode 1018 and passing through a portion of the warp shed defined by warp threads 1010A-B (forward and aft positions) and the profiles of profile reeds 1008A-B attached to sley 1012. In operation, at a predetermined time directed energy deposition device 1016 deposits electricity along the straight path to create low density guide path A. Nozzle 1004 in communication with a high pressure air supply 1006 then propels a portion of weft yarn 1002 through low density guide path A.

## Claims

1. A method of operating an intermittent air jet weaving machine (1000) to form a textile, said air jet weaving machine (1000) having a weft yarn (1002), which is propelled by a burst of high pressure air using at least one compressed gas booster (1006), and a warp shed defined by warp threads (1010A, 1010B), the method comprising depositing energy to form a low density guide path (A) for the weft yarn (1002) to pass through the warp shed defined by the warp threads (1010A, 1010B), **characterized by** using laser energy and/or electric discharge energy to impulsively heat the air along a straight path to form the low density guide path (A) surrounded by a higher density region, said higher density region containing at least a fraction of the heated portion of the air; directing at least a portion of the weft yarn (1002) into the low density guide path (A).

2. The method of claim 1, wherein the laser energy is produced by at least one laser optical element (1014) and/or the electric discharge energy is produced by high-voltage-electrodes (106, 107), wherein the laser optical element (1014) and/or the high-voltage electrodes are arranged on a support structure.

3. The method of claim 1 and 2, wherein depositing energy comprises depositing in the range of 5-50 mJ per 10 cm of the low density guide path (A) per 1 mm diameter of weft yarn (1002).

4. The method of any one of any one of claims 1-3, wherein the weft yarn (1002) has a diameter of in the range of 0.1-1 mm.

5. The method of any one of any one of claims 1-4, wherein the weft yarn (1002) travels through the low density guide path (A) at a speed in the range of 100-500 m/s.

6. The method of any one of claims 1-5, wherein the textile is formed at a rate in the range of between 500-60,000 picks per minute.

7. The method of any one of claims 1-6, wherein the low density guide path (A) is cylindrical.

8. The method of any one of claims 2-7, wherein the burst of high pressure air using the at least one compressed gas booster is synchronized with the energy deposition using the optical element and/or the high-voltage-electrodes.

9. The method of any one of claims 1-8, wherein the low density guide path (A) is formed downstream of the burst of high pressure air.

10. The method of any one of claims 1-9, wherein a further portion of energy is deposited downstream of the compressed gas booster (1006) to form a further low density guide path.

11. The method of any one of claims 1-10, wherein the weft yarn (1002) is moistened with a quantity of water.

12. The method of claim 11, wherein at least a portion of the quantity of water is vaporized in the low density guide path (A).

13. An intermittent air jet weaving machine configured to form a textile, comprising:
i) a machine comprising a plurality of profile reeds (1008A, 1008B) mounted on a sley (1012), said machine configured to form a warp shed defined by warp threads (1010A, 1010B);
ii) a weft yarn nozzle (1004) in communication with at least one compressed gas booster (1006),
iii) a directed energy deposition assembly, said assembly configured to generate a low density guide path (A) across the warp shed; and
iv) said weft yarn nozzle (1004) configured to propel a portion of a weft yearn (1002) through the low density guide path (A) and **characterized in**
v) at least one laser optical element (1014) configured to produce laser energy for impulsively heating of the air along the low density guide path (A) and/or high-voltage-electrodes (106, 107) configured to produce electric discharge energy for impulsively heating of the air along the low density guide path (A).

14. The machine of claim 13, wherein the warp shed is in the range of 3-30 m in length.

## Patentansprüche

1. Verfahren zum Betreiben einer intermittierenden Luftstrahl-Webmaschine (1000), um ein Gewebe zu bilden, wobei die Luftstrahl-Webmaschine (1000) ein Schussgarn (1002), das durch einen Hochdruckluftstoß unter Verwendung mindestens eines Druckgasverstärkers (1006) vorwärtsgetrieben wird, und ein durch Kettfäden (1010A, 1010B) definiertes Kettfach aufweist, wobei das Verfahren umfasst:
Ablagern von Energie, um einen Führungsweg (A) mit geringer Dichte auszubilden, damit sich das Schussgarn (1002) durch das durch die Kettfäden (1010A, 1010B) definierte Kettfach bewegt, **gekennzeichnet durch** das Verwenden von Laserenergie und/oder elektrischer Entladungsenergie, um die Luft entlang eines geraden Weges stoßartig zu erwärmen, um den Führungsweg (A) mit geringer Dichte, umgeben von einem Bereich mit höherer Dichte, auszubilden, wobei der Bereich mit höherer Dichte zumindest einen Anteil des erwärmten Teiles der Luft enthält; Lenken zumindest eines Teiles des Schussgarnes (1002) in den Führungsweg (A) mit geringer Dichte.

2. Verfahren nach Anspruch 1, wobei die Laserenergie durch mindestens ein laseroptisches Element (1014) erzeugt wird und/oder die elektrische Entladungsenergie durch Hochspannungselektroden (106, 107) erzeugt wird, wobei das laseroptische Element (1014) und/oder die Hochspannungselektroden auf einer Trägerstruktur angeordnet sind.

3. Verfahren nach Anspruch 1 und 2, wobei das Ablagern von Energie das Ablagern im Bereich von 5-50 mJ pro 10 cm des Führungsweges (A) mit geringer Dichte pro 1 mm Durchmesser des Schussgarnes (1002) umfasst.

4. Verfahren nach einem der Ansprüche 1-3, wobei das Schussgarn (1002) einen Durchmesser im Bereich von 0,1-1 mm aufweist.

5. Verfahren nach einem der Ansprüche 1-4, wobei das Schussgarn (1002) sich mit einer Geschwindigkeit im Bereich von 100-500 m/s durch den Führungsweg (A) mit geringer Dichte bewegt.

6. Verfahren nach einem der Ansprüche 1-5, wobei das Gewebe mit einer Geschwindigkeit im Bereich zwischen 500-60.000 Schuss pro Minute ausgebildet wird.

7. Verfahren nach einem der Ansprüche 1-6, wobei der Führungsweg (A) mit geringer Dichte zylindrisch ist.

8. Verfahren nach einem der Ansprüche 2-7, wobei der Hochdruckluftstoß unter Verwendung des mindestens einen Druckgasverstärkers mit der Energieablagerung unter Verwendung des optischen Elementes und/oder der Hochspannungselektroden synchronisiert wird.

9. Verfahren nach einem der Ansprüche 1-8, wobei der Führungsweg (A) mit geringer Dichte dem Hochdruckluftstoß nachgeschaltet ausgebildet wird.

10. Verfahren nach einem der Ansprüche 1-9, wobei ein weiterer Teil der Energie dem Druckgasverstärker (1006) nachgeschaltet abgelagert wird, um einen weiteren Führungsweg mit geringer Dichte auszubilden.

11. Verfahren nach einem der Ansprüche 1-10, wobei das Schussgarn (1002) mit einer Wassermenge befeuchtet wird.

12. Verfahren nach Anspruch 11, wobei zumindest ein Teil der Wassermenge in dem Führungsweg (A) mit geringer Dichte verdampft wird.

13. Intermittierende Luftstrahl-Webmaschine, die dazu ausgestaltet ist, ein Gewebe auszubilden, umfassend:
i) eine Maschine, umfassend eine Mehrzahl von Profilrieten (1008A, 1008B), die auf einer Weblade (1012) montiert sind, wobei die Maschine dazu ausgestaltet ist, ein durch Kettfäden (1010A, 1010B) definiertes Kettfach auszubilden;
ii) eine Schussgarndüse (1004), die mit mindestens einem Druckgasverstärker (1006) in Verbindung steht;
iii) eine Anordnung zur gerichteten Energieablagerung, wobei die Anordnung dazu ausgestaltet ist, einen Führungsweg (A) mit geringer Dichte quer durch das Kettfach zu erzeugen; und
iv) wobei die Schussgarndüse (1004) dazu ausgestaltet ist, einen Teil eines Schussgarnes (1002) durch den Führungsweg (A) mit geringer Dichte vorwärtszutreiben, und **gekennzeichnet durch**
v) mindestens ein laseroptisches Element (1014), das dazu ausgestaltet ist, Laserenergie zur stoßartigen Erwärmung der Luft entlang des Führungsweges (A) mit geringer Dichte zu erzeugen, und/oder Hochspannungselektroden (106, 107), die dazu ausgestaltet sind, elektrische Entladungsenergie zur stoßartigen Erwärmung der Luft entlang des Führungsweges (A) mit geringer Dichte zu erzeugen.

14. Maschine nach Anspruch 13, wobei die Länge des Kettfaches im Bereich von 3-30 m liegt.

## Revendications

1. Procédé destiné à faire fonctionner une machine à tisser à jet d'air intermittent (1000) pour former un textile, ladite machine à tisser à jet d'air (1000) ayant un fil de trame (1002), qui est poussé par une rafale d'air à haute pression en utilisant au moins un surpresseur de gaz comprimé (1006), et une foule de fils de chaîne définie par des fils de chaîne (1010A, 1010B), le procédé comprenant un dépôt d'énergie afin de former un chemin de guidage à faible densité (A) pour que le fil de trame (1002) passe à travers la foule de fils de chaîne définie par les fils de chaîne (1010A, 1010B), **caractérisé par** l'utilisation d'une énergie par laser et/ou d'une énergie par décharge électrique pour chauffer par impulsions l'air le long d'un chemin direct afin de former le chemin de guidage à faible densité (A) entouré par une région de densité plus élevée, ladite région de densité plus élevée contenant au moins une fraction de la partie chauffée de l'air, dirigeant au moins une partie du fil de trame (1002) dans le chemin de guidage à faible densité (A).

2. Procédé selon la revendication 1, dans lequel l'énergie par laser est produite par au moins un élément optique à laser (1014) et/ou l'énergie par décharge électrique est produite par des électrodes à haute tension (106, 107), dans lequel l'élément optique à laser (1014) et/ou les électrodes à haute tension sont agencé(e)s sur une structure de support.

3. Procédé selon la revendication 1 et 2, dans lequel le dépôt d'énergie comprend le dépôt dans la plage de 5 à 50 mJ par 10 cm du chemin de guidage à faible densité (A) par 1 mm de diamètre de fil de trame (1002).

4. Procédé selon une quelconque des revendications 1 à 3, dans lequel le fil de trame (1002) a un diamètre compris dans la plage de 0,1 à 1 mm.

5. Procédé selon une quelconque des revendications 1 à 4, dans lequel le fil de trame (1002) se déplace à travers le chemin de guidage à faible densité (A) à une vitesse comprise dans la plage de 100 à 500 m/s.

6. Procédé selon une quelconque des revendications 1 à 5, dans lequel le textile est formé à une vitesse comprise dans la plage entre 500 et 60 000 duites par minute.

7. Procédé selon une quelconque des revendications 1 à 6, dans lequel le chemin de guidage à faible densité (A) est cylindrique.

8. Procédé selon une quelconque des revendications 2 à 7, dans lequel la rafale d'air à haute pression utilisant l'au moins un surpresseur de gaz comprimé est synchronisée avec le dépôt d'énergie en utilisant l'élément optique et/ou les électrodes à haute tension.

9. Procédé selon une quelconque des revendications 1 à 8, dans lequel le chemin de guidage à faible densité (A) est formé en aval de la rafale d'air à haute pression.

10. Procédé selon une quelconque des revendications 1 à 9, dans lequel une autre partie d'énergie est déposée en aval du surpresseur de gaz comprimé (1006) afin de former un autre chemin de guidage à faible densité.

11. Procédé selon une quelconque des revendications 1 à 10, dans lequel le fil de trame (1002) est humidifié avec une quantité d'eau.

12. Procédé selon la revendication 11, dans lequel au moins une partie de la quantité d'eau est vaporisée dans le chemin de guidage à faible densité (A).

13. Machine à tisser à jet d'air intermittent configurée pour former un textile, comprenant :
i) une machine comprenant une pluralité de peignes à profilés (1008A, 1008B) montés sur un battant (1012), ladite machine étant configurée pour former une foule de fils de chaîne définie par des fils de chaîne (1010A, 1010B);
ii) une filière de fil de trame (1004) en communication avec au moins un surpresseur de gaz comprimé (1006),
iii) un ensemble de dépôt d'énergie dirigé, ledit ensemble étant configuré pour générer un chemin de guidage à faible densité (A) à travers la foule de fils de chaîne ; et
iv) ladite filière de fil de trame (1004) étant configurée pour pousser une partie d'un fil de trame (1002) à travers le chemin de guidage à faible densité (A) et **caractérisée par**
v) au moins un élément optique à laser (1014) configuré pour produire une énergie par laser pour chauffer par impulsions l'air le long du chemin de guidage à faible densité (A) et/ou des électrodes à haute tension (106, 107) configurées pour produire une énergie par décharge électrique pour chauffer par impulsions l'air le long du chemin de guidage à faible densité (A).

14. Machine selon la revendication 13, dans lequel la foule de fils de chaîne est comprise dans la plage de 3 à 30 m de longueur.
